# EUROPEAN PATENT APPLICATION

(11) **EP 1 555 788 A1**
(43) Date of publication of application: **20.07.2005**
(21) Application number: 04290111.6
(22) Date of filing: 15.01.2004
(51) Int. Cl.: H04L 29/06, H04N 7/24, H04N 7/36, H04N 7/50

(54) **Method for improving the quality of an encoded video bit stream transmitted over a wireless link, and corresponding receiver**

(71) Applicant: ALCATEL, 75008 Paris (FR)
(72) Inventor: Nguyen Hang, 92110 Clichy-la-Garenne (FR); Rouffet Denis, 92100 Boulogne Billancourt (FR)
(74) Representative: Wetzel, Emmanuelle

(57) **Abstract**

The present invention relates to a method for improving the quality of an encoded video bit stream transmitted over a wireless link.

According to the present invention, the method comprises the steps of:
- detecting a packet loss at an upper communication layer (GOB or RPT level),
- Including a new created packet at the location of the detected lost packet,
- generating said new created packet as a function of the part of the previous image corresponding to the lost packet;
- computing header fields of the new created packet from the previous packet in said video bit stream.

## Description

### BACKGROUND OF THE INVENTION

The present invention relates to a method for improving the quality of an encoded video bit stream transmitted over not reliable transmission medium such as wireless or radio links.

Video streaming over non reliable transmission medium are more and more becoming a reality while facing different issues. On the one hand, the available bit rate in mobile networks is still low whereas video streaming applications are very bandwidth demanding. On the other hand, the compressed video bit streams are not robust enough for transmission over non reliable transmission networks due to the type of compression used. Usual video compression standards contain spatial resp. spatial and temporal compression. Temporal compression consists in that only the first image or one image at predefined time intervals is entirely encoded, for subsequent images only the difference to the entirely encoded image is encoded. Spatial compression usually consists in that the image is firstly applied a transform compression technology such as discrete cosine transform or wavelets and secondly applied an entropy compression technology such as Huffmann code, arithmetic code RVLC or U-VLC all belonging to the family of Variable Length Codes. If transmission errors occurs, it may leads to a loss of synchronization between the transmitter and the receiver. In such cases, the packet loss degrade dreadfully the video quality which even becomes unacceptable.

In video compression algorithms (as ITU-T Recommendation H.263, "Video coding for low bit rate communication" or MPEG 4), a solution to this problem consists increasing the update frequency of the images to be transmitted.

A drawback is that a video sequence having one additional intra encoded image every ten images to increase the update frequency requires a bit rate two or three time higher than a video sequence having one additional intra encoded image every twenty images.

A particular object of the present invention is to provide a method for increasing the reliability of compressed video bit stream to be transmitted on communication networks having a non-reliable transmission medium without increasing the bit rate to be transmitted on the medium.

Another object of the invention is to provide a receiver for performing this method.

### SUMMARY OF THE INVENTION

These objects, and others that appear below, are achieved by a method improving the quality of an encoded video bit stream transmitted over a wireless link of a radio communication network according to claim 1, and a corresponding receiver according to claim 6.

According to the present invention, the method consists in detecting lost packets in the compressed video bit streams at upper communication layers and replacing these packets by packets corresponding to the same part of the previous image.

In a preferred embodiment of the present invention, the lost packets are detected at the compressed video bit stream layer.

In another preferred embodiment of the present invention, the lost packets are detected at the RTP bit stream layer.

The method according to the present invention presents the advantage to provide an acceptable quality without increasing the bit rate over the wireless link and by exploiting the similarity between consecutive images of the same video sequence.

The method according to the present invention further presents the advantage to limit the error propagation. Indeed, each decoded frame is used as a reference for decoding the next one. Replacing an erroneous part of the image by an acceptable one is always a better reference than an omitted part.

Moreover, the present invention presents the advantage to increase the video sequence quality without impacting the video codec and the encoding/decoding process since the error concealment is performed at a higher level.

The present invention presents also a reduced complexity and reduced time processing.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows an illustration of the method according to the present invention;
- Figure 2 shows the picture layer structure;
- Figure 2a shows the Group of block header structure;
- Figure 3 shows the RTP layer structure;
- Figure 3a shows the RTP header structure;
- Figure 4 shows a receiver according to the present invention.

### DETAILED DESCRIPTION OF THE INVENTION

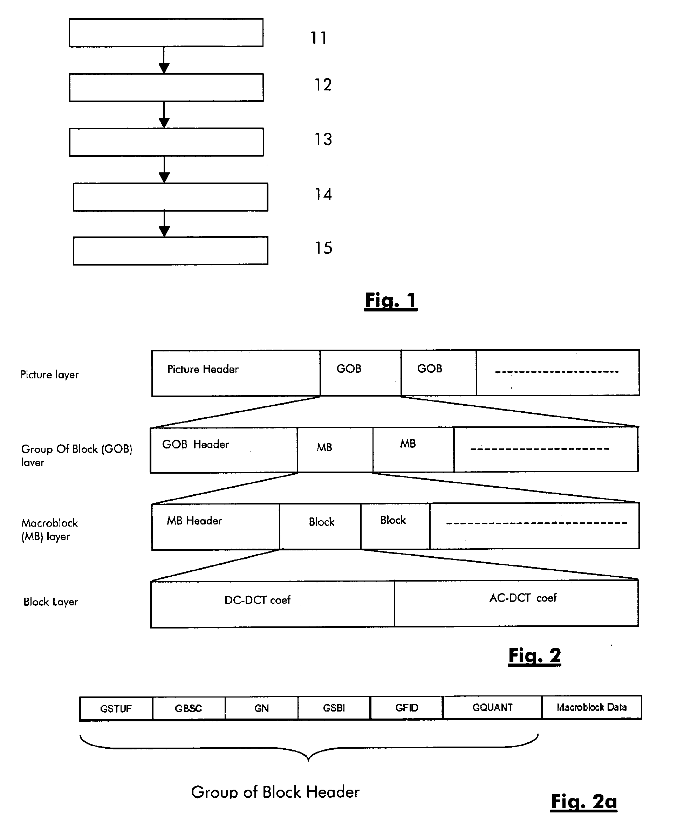

Figure 1 shows an illustration of the method according to the present invention.

The method according to the present invention comprises following steps:

Step 11 consists in receiving a video bit stream using a usual video encoding algorithm according for example to H.263, H.264 or MPEG 4 standards.

Step 12 consists in detecting a packet loss at an upper communication layer.

In preferred embodiments of the present invention, the packet loss is detected at the GOB Group of block layer or at the RTP layer.

Figure 2 shows the compressed video image hierarchy comprising picture layer, Group of Block layer, Macroblock layer and Block layer. Picture layer is constituted of frames comprising a picture header and encapsulates several Groups of Blocks. A Group of block comprises a Group of Block header and encapsulates several macroblocks. A macroblock comprises a macroblock header and several blocks. A Block comprises CD-DCT coefficients and AC-DCT coefficients as defined in the video encoding standards.

Step 12 consists in checking the sequence number of the GOB header or RTP header. It is part of the usual standard to include consecutive increasing sequence numbers in consecutive Groups of Blocks or consecutive RTP frames. At the receiver, if the usual decoding mechanism detects an error it is not able to correct, the erroneous packet is discarded. If non consecutive sequence numbers are detected, a packet loss is found. Steps 13 and following are then performed.

In a first embodiment, the header of a Group of Blocks comprising compressed video image is used for finding out a missing packet. Figure 2a gives the structure of a Group of Block header according to the H.263 standard. GN field gives the sequence number of the current Group of Blocks.

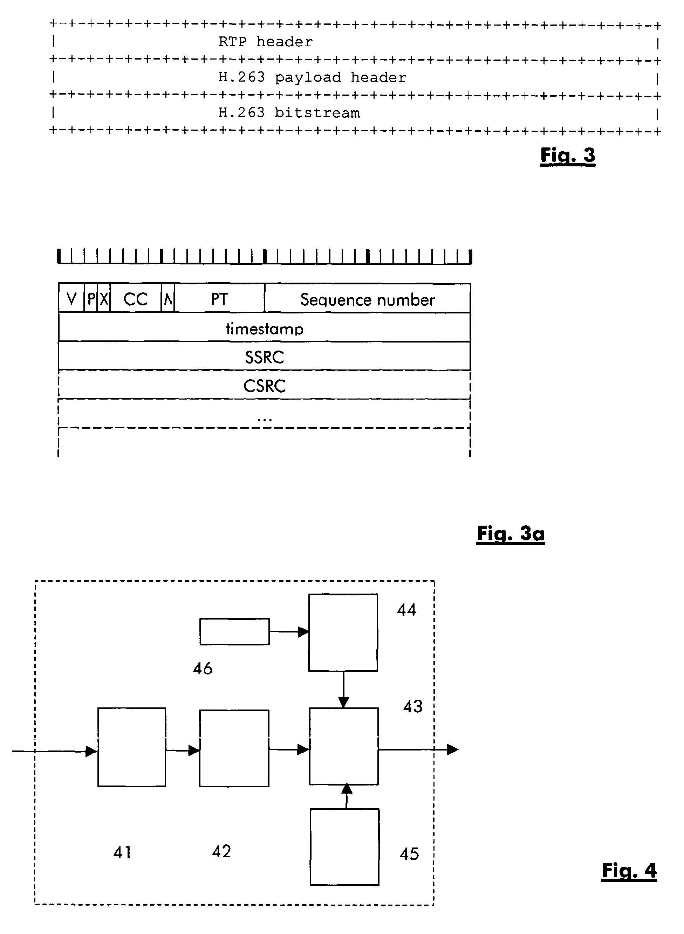

In a second embodiment of the present invention, the RTP header of the RTP frame comprising the compressed video image can also be used for detecting missing parts of a picture. In H.263, the RTP flow has a structure as shown on fig 3. A RTP frame comprises a RTP header, a video data payload header and a video data payload field. The RTP standards recommend to use one RTP frame for one or several GOB(s) (Group of Blocks in the compressed video bit stream structure).

Figure 3a details the RTP header defined in the RTP standards, two fields called "sequence number" and "timestamp" are used here as a RTP frame loss detectors and enable it to detect a missing part of a picture.

Step 13 consists in including a new created packet at the place of the lost one. In case of a detection of lost packet at Group of Block layer, the payload comprising several macroblocks should be replaced by new created macroblocks. In case of detection a RTP layer, the video data payload should be replaced by a new created video data payload.

Step 14 consists in generating the payload of the new created packet as a copy of the corresponding part of the previous image in the video sequence. For this purpose, a copy of the previous image should be stored in a memory in order to be able to retrieve the part of the previous image corresponding to the missing packet.

Step 15 consists in filling in the header field of the new created packet. The new created packet should have the sequence number corresponding to the lost packet.

This solution has the advantage to replace missing parts of the video bit streams by plausible packets corresponding to the part of the previous image. Indeed, the modification of a part of a picture is relatively slow so that repeating the previous corresponding part generates less error than completely discarding the erroneous part.

It will be clear for a person skilled in the art that the present invention covers also embodiment where the error detection is done at another upper communication layer than the Group of Blocks or RTP layer under the condition that this layer comprises information so that a missing frame can be detected as for example a sequence number or a timestamp.

The present invention is based on the fact that two consecutive frames in a video sequence may have few changes. As a consequence, their encoded bit stream (e.g. Groups of Blocks or slice(s) for H.264 or MPEG-4 standards), when decoded, have few differences in the final picture. Because each Group of Block can be decoded independently of others Group of Block from the same frame (or slice(s) for H.264 or MPEG-4 standards), the result of the copying the part of the previous image at the location of the lost packet should be acceptable to the end-user in that there is no visible artifact on the picture.

It will also be clear for person skilled in the art that the missing part can also be replaced by a new created packet corresponding to a combination of the corresponding part of several previous pictures. More complex considerations can also be taken into account to generate the new created packets. For example, it can be evaluated for non missing part of the image, how much they differ from the corresponding part of the previous image. This enables it to apply a the same transformation to the part of the previous image corresponding to the missing part of the current image.

Figure 4 shows a receiver according to the present invention. The receiver is adapted to receive video bit stream transmitted over a wireless link. The receiver comprises a decoder 41 for decoding video streaming data, means 42 for detecting a packet loss at an upper communication layer, means 43 for including a new created packet at the location of the detected lost packet, means 44 for generating the new created packet as a function of the part of the previous image corresponding to the lost packet, and means 45 for computing header fields of the new created packet from the previous packet in the video bit stream. Moreover, the receiver additionally comprises a memory 46 for storing the image preceding the currently decoded image.

Upon reception of an image to decode, the receiver detects if a packet is lost at an upper communication layer. If it is the case the receiver create artificially a new packet that will replace the detected lost packet and includes a new created packet at the location of the missing one. The new created packet is calculated as a function of the corresponding part of the previous image. The "new artificial" packet "is written" in the video compression standard syntax, or RTP syntax. This syntax is an encoded message (in the video compression encoding syntax or in the RTP syntax). Then this encoded message is given to the video decoder which will decode this message as if it were a received video packet.

Preferably, this syntax (the encoded message) can be written so that the video decoder decodes the message as if there is no change compared with the previous message. Here, an "encoded message" (in RTP syntax or video compressor syntax) will be decoded by the video decoder as if there were no change compared with the previous image.

In a first embodiment of the present invention, the "video compressed syntax" packet is obtained when the packet loss resilience is done just before the video decoder.

In a second embodiment of the present invention, the "RTP syntax" packet is obtained if the packet loss resilience is done at the RTP level.

It will be understood by those skilled in the art that it is not necessary that the new created packet is exactly the same as the lost one. More generally, the "encoded message" packet can also show a small change and give the change vector; or that the loss packet is a mean between several previous or the next images.

## Claims

1. Method for improving the quality of an encoded video bit stream transmitted over a wireless link, said method comprising the steps of:
- detecting (12) a packet loss at an upper communication layer;
- Including (13) a new created packet at the location of the detected lost packet;
- generating (14) said new created packet as a function of the part of the previous image corresponding to the lost packet;
- computing (15) header fields of the new created packet from the previous packet in said video bit stream.

2. Method according to claim 1, **characterised in that** said packet loss is detected at Group of Blocks layer by checking the occurrence of non consecutive Group of Blocks sequence number in the Group of Blocks header.

3. Method according to claim 1, **characterised in that** said packet loss is detected at RTP layer by checking the occurrence of non consecutive RTP sequence number in the RTP packet header.

4. Method according to claim 1, **characterised in that** said new created packet is a compressed video packet calculated as a function of the corresponding part of the previous image.

5. Method according to claim 1, **characterised in that** it further comprises a step of
- determining for at least one correctly received part of an image the modification of this part compared to the corresponding part of the previous image
- generating the new created packet by applying the same modification to the part of the previous image corresponding to the lost packet.

6. Receiver adapted to receive an encoded video bit stream transmitted over a wireless link, said receiver comprising a decoder for decoding , said receiver being **characterised in that** it further comprises:
- means (42) for detecting a packet loss at an upper communication layer;
- means (43) for including a new created packet at the location of the detected lost packet;
- means (44, 46) for generating said new created packet as a function of the part of the previous image corresponding to the lost packet; and
- means (45) for computing header fields of the new created packet from the previous packet in said video bit stream.
